# EUROPEAN PATENT APPLICATION

(11) **EP 4 629 526 A1**
(43) Date of publication of application: **08.10.2025**
(21) Application number: 24168542.9
(22) Date of filing: 04.04.2024
(51) Int. Cl.: H04B 10/071, H04B 10/272

(54) **TELECOMMUNICATIONS NETWORK AND METHOD OF OPERATING THE SAME**

(71) Applicant: British Telecommunications public limited company, London E1 8EE (GB)
(72) Inventor: POUSTIE, Alistair, London, E1 8EE (GB)
(74) Representative: British Telecommunications public limited company Intellectual Property Department

(57) **Abstract**

A method (200) of operating a fibre optic telecommunications network (100), said network comprising a/an: spine fibre (120); pair of feeder fibres (150); retroreflector (160) arranged on each of the feeder fibres; optical coupler (140) configured to split the spine fibre into the pair of feeder fibres; optical source (110) connected to the spine fibre and configured to transmit a coherent optical signal through the spine fibre to each of the retroreflectors, via the optical coupler and the pair of feeder fibres, said optical signal having a coherence length equal to or greater than distances between: the optical coupler and each of the retroreflectors, along the respective feeder fibre; and each of the retroreflectors, along the pair of feeder fibres and via the optical coupler; and optical detector (170) connected to the spine fibre; the method comprising the steps of: transmitting, by the optical source, the optical signal to the retroreflectors (210); monitoring, at the optical detector, for a reflection of the transmitted optical signal from at least one of the retroreflectors (220); and in response to detecting that the reflection is: absent, determining that the spine fibre and/or both of the feeder fibres comprise a fault (260-2); present and absent an interference pattern, determining that one, but not the other, of the feeder fibres comprises a fault (260-1); and present and comprises an interference pattern, determining that the spine fibre and both the feeder fibres are intact (240-1).

## Description

### Field of Invention

The present invention relates to a fibre optic telecommunications network and a method of operating the same, and in particular so as to detect discontinuities in said network.

### Background

Passive Optical Networks (PONs) help provide cost-effective large-area fixed-access network connectivity by utilising a passive optical splitter to distribute signals to a plurality of Optical Network Terminal (ONT) end-points (typically, thirty-two), thereby creating a point-to-multipoint network.

To help ensure effective operation, PONs are monitored, typically using Optical Time-Domain Reflectometry (OTDR), to confirm that the constituent physical fibre optic network is intact and free from discontinuities (e.g. breaks and disconnections).

However, OTDR often cannot usefully measure beyond the passive optical splitter owing to the high optical insertion loss of the splitter, and cannot in and of itself discriminate between different limbs after the splitter.

However, as described above, it is desirable to measure the optical integrity of the optical feeder fibres that connect the ONTs to the splitter.

It is an aim of the present invention to alleviate at least some of the aforementioned problems.

### Statements of Invention

According to a first aspect of the present invention, there is provided: a method of operating a fibre optic telecommunications network, said network comprising a/an: spine fibre; pair of feeder fibres; retroreflector arranged on each of the feeder fibres; optical coupler configured to split the spine fibre into the pair of feeder fibres; optical source connected to the spine fibre and configured to transmit a coherent optical signal through the spine fibre to each of the retroreflectors, via the optical coupler and the pair of feeder fibres, said optical signal having a coherence length equal to or greater than distances between: the optical coupler and each of the retroreflectors, along the respective feeder fibre; and each of the retroreflectors, along the pair of feeder fibres and via the optical coupler; and optical detector connected to the spine fibre; the method comprising the steps of: transmitting, by the optical source, the optical signal to the retroreflectors; monitoring, at the optical detector, for a reflection of the transmitted optical signal from at least one of the retroreflectors; and in response to detecting that the reflection is: absent, determining that the spine fibre and/or both of the feeder fibres comprise a fault; present and absent an interference pattern, determining that one, but not the other, of the feeder fibres comprises a fault; and present and comprises an interference pattern, determining that the spine fibre and both the feeder fibres are intact.

Optionally, detecting that the reflection is absent comprises measuring an amplitude or intensity of the reflection to be below a pre-defined threshold, in which said threshold may have a zero, or substantially a zero, value. Optionally, the network comprises at least the pair of feeder fibres, and may therefore comprise at least one additional feeder fibre, and the optical coupler may be configured also to split the spine fibre into the at least one additional feeder fibre. Optionally, the at least one additional feeder fibre also each comprise a retroreflector. Preferably, the light source, and thus the optical signal, has a narrow linewidth, and preferably less than 20Mhz, and more preferably less than 10Mhz, and still more preferably less than 5Mhz, and yet more preferably less than 1 MHz. Preferably, the telecommunications network is determined to form a Michelson Interferometer when the reflection is detected to have an interference pattern. Optionally, the step of determining is performed by a processor in communication with the optical detector. Optionally, in response to determining presence of the fault, the processor is configured to output an alert or notification, which may identify the determined location of the fault.

Preferably, the step of determining that the reflection comprises the interference pattern comprises the further steps of: measuring, at the optical detector, temporal variation of intensity of the reflection; and identifying the interference pattern to be present in response to the variation exceeding a pre-determined threshold. Preferably, the step of determining that the interference pattern is absent from the reflection comprises the further steps of: measuring, at the optical detector, temporal variation of amplitude of the reflection; and identifying the interference pattern to be absent in response to the variation not exceeding the pre-determined threshold. Preferably, the pre-determined threshold is greater than a variation in intensity of the reflected optical signal when returned from only one of the retroreflectors, and may be two, five or an order of magnitude greater.

Optionally, the optical detector comprises a: photodiode; photomultiplier; phototransistor; and/or any non-imaging light sensor. Preferably, the optical signal is a pulse with a duration substantially, or at least, equal to a period for measuring the temporal variation of the intensity or amplitude of the reflection, and may comprise a continuous pulse. Optionally, the period is selected in dependence upon a time of day and/or temperature data (e.g. from a weather forecast or readings from a weather station) in a local environment (e.g. at, proximate to, or most proximate to) the pair of feeder fibres, and in which the period is decreased with an increasing rate of change of temperature, and vice versa.

Preferably, the spine fibre and the pair of feeder fibres each comprise multi-mode fibre optic cables, wherein the detector comprises an imaging sensor, and wherein the step of determining the presence of the interference pattern comprises identifying an image of an interference pattern as sensed by the image sensor.

Preferably, each retroreflector is switchable between a reflective state, in which to reflect the optical signal thereby to produce the reflection, and a non-reflective state, in which to permit the optical signal to pass beyond the retroreflector. Optionally, the retroreflector is actuatable in- and out-of-path of the optical signal, thereby to result in the reflective state and non-reflective state, respectively. Optionally, the retroreflector is an optoelectrical reflector, and is switchable between the reflective and a transparent (or, the non-reflective) state. Optionally, the network further comprises a further pair of feeder cables, branching from the optical coupler, and each comprising a further retroreflector, wherein the method is performed pair-wise for each set of retroreflectors.

Preferably, each retroreflector is reflective at a first frequency band and is transparent at a second, different, frequency band, and wherein the: optical signal is within the first frequency band and not within the second frequency band; and first frequency band is for diagnostic services and not for providing telecommunications services to a user.

Preferably, the first frequency band is within the U-band, C-band and/or L-Band, as defined by the ITU Telecommunication Standardization Sector. Preferably, the first frequency band is between 1200nm and 1700nm, and still more preferably between 1625nm and 1675nm, or between 1525nm and 1575nm. Preferably, the diagnostic test service does not carry signals for providing a telecommunications service to a user, and is therefore merely for testing and diagnostics. Preferably, the second frequency band is between 1200nm and 1650nm. Optionally, the first frequency band is for providing telecommunications services.

Preferably, the network further comprises: at least one further feeder fibre, branching from the optical coupler and comprising a further retroreflector; and wherein the method further comprises the steps of: analysing the reflection so as to determine the number of the at least three feeder fibres that form the interference pattern; and determining said number of the three feeder fibres to be intact, and the remaining feeder fibres to comprise a fault.

Preferably, the coherence length of the optical signal is equal to or greater than a distance between all of the retroreflectors, via each pair of feeder fibres and via the optical coupler and between each retroreflector and the optical coupler. Preferably, the network is capable of operating as a multi-path (i.e. having at least three paths) interferometer.

Optionally, determining the number of the at least three feeder fibres that form the interference pattern comprises analysing an imaged interference pattern to categorise a complexity of the interference pattern (e.g. as to harmonics, fringe patterns, and a rate of spatial and temporal variation), a greater complexity being indicative of a greater number of the feeder fibres forming the interference pattern, and/or measuring a rate of change in an intensity of the reflection, in which (within thresholds) is indicative of a greater number of the feeder fibres forming the interference pattern. Optionally, said analysing is performed using a machine learning algorithm trained on a set of training data comprising a known number of paths generating an interference pattern.

Preferably, the method further comprises a step of varying a wavelength of the optical signal whilst performing the monitoring for the reflection. Preferably, determining the presence or absence of the interference pattern is performed using the wavelength of the optical signal that exhibits the greatest interference and/or temporal variation in intensity. Optionally, at least two different wavelengths are used or the wavelength is varied continuously. Optionally, the wavelengths are randomly selected or are pre-defined. Optionally, the wavelength is varied in response to determining that the reflection is present and absent an interference pattern.

According to another aspect of the invention, there is provided a computer-readable carrier medium comprising a computer program, which, when the computer program is executed by a computer, causes the computer to carry out the steps of any of the methods described above.

According to yet another aspect of the invention, there is provided a fibre optic telecommunications network comprising a/an: spine fibre; pair of feeder fibres; retroreflector arranged on each of the feeder fibres; optical coupler configured to split the spine fibre into the pair of feeder fibres; optical source connected to the spine fibre and configured to transmit a coherent optical signal through the spine fibre to each of the retroreflectors, via the optical coupler and the pair of feeder fibres, said optical signal having a coherence length equal to or greater than distances between: the optical coupler and each of the retroreflectors, along the respective feeder fibre; and each of the retroreflectors, along the pair of feeder fibres and via the optical coupler; optical detector connected to the spine fibre; and processor configured to process readings from the optical detector; wherein the: optical source is configured to transmit the optical signal to the retroreflectors; optical detector is configured to monitor for a reflection of the transmitted optical signal from at least one of the retroreflectors; and processor is configured to, in response to detecting, from the readings, that the reflection is: absent, determine that the spine fibre and/or both of the feeder fibres comprise a fault; present and absent an interference pattern, determine that one, but not the other, of the feeder fibres comprises a fault; and present and comprises an interference pattern, determine that the spine fibre and both the feeder fibres are intact.

Preferably, each of the feeder fibres comprise an Optical Network Terminal (ONT) at a terminus, distal to the optical coupler. Preferably, the light source comprises a laser, and may comprise a Distributed Feedback (DFB) Laser. Optionally, the spine fibre and/or pair of feeder fibres comprise a single-mode fibre optic cable. Preferably, the network is a Passive Optical Network. Optionally, the readings comprise an image and/or a measure of light intensity and/or amplitude.

The above summary is not intended to describe each illustrated embodiment or every implementation of the subject matter hereof. The invention includes any novel aspects described and/or illustrated herein. The invention also extends to methods and/or apparatus substantially as herein described and/or as illustrated with reference to the accompanying drawings. The invention is also provided as a computer program and/or a computer program product for carrying out any of the methods described herein and/or for embodying any of the apparatus features described herein, and a computer-readable medium storing thereon a program for carrying out any of the methods and/or for embodying any of the apparatus features described herein. Features described as being implemented in hardware may alternatively be implemented in software, and vice versa.

It should be understood that the individual operations used in the methods of the present teachings may be performed in any order and/or simultaneously, as long as the teaching remains operable. Furthermore, it should be understood that the apparatus and methods of the present teachings can include any number, or all, of the described embodiments, as long as the teaching remains operable.

Any apparatus feature may also be provided as a corresponding step of a method, and vice versa. As used herein, means plus function features may alternatively be expressed in terms of their corresponding structure, for example as a suitably-programmed processor.

Any feature in one aspect of the invention may be applied, in any appropriate combination, to other aspects of the invention. Any, some and/or all features in one aspect can be applied to any, some and/or all features in any other aspect, in any appropriate combination. Particular combinations of the various features described and defined in any aspects of the invention can be implemented and/or supplied and/or used independently.

As used throughout, the word 'or' can be interpreted in the exclusive and/or inclusive sense, unless otherwise specified.

The invention extends to a fibre optic telecommunications network and a method of operating the fibre optic telecommunications network as described herein and/or substantially as illustrated with reference to the accompanying drawings. The present invention is now described, purely by way of example, with reference to the accompanying diagrammatic drawings, in which:
Figure 1 is a schematic of a fibre optic telecommunications network; and
Figure 2 shows a method of operating the fibre optic telecommunications network.

While various embodiments are amenable to various modifications and alternative forms, specifics thereof have been shown by way of example in the drawings and will be described in detail. It should be understood, however, that the intention is not to limit the claimed inventions to the particular embodiments described. On the contrary, the intention is to cover all modifications, equivalents, and alternatives falling within the spirit and scope of the subject matter as defined by, at least, the claims.

### Specific Description

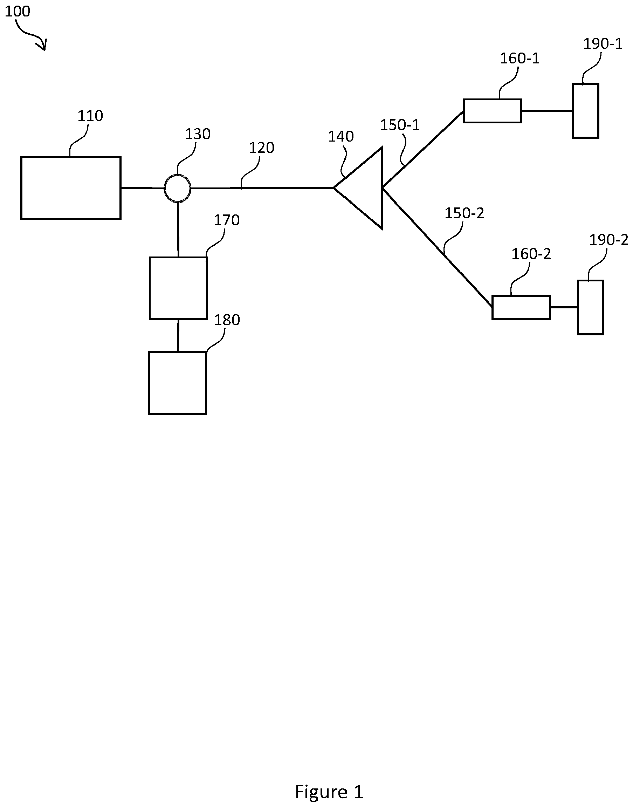

Figure 1 is a schematic of a fibre optic telecommunications network (herein simply "network") 100 comprising a/an: optical source 110; spine fibre 120; circulator 130; optical coupler 140; pair of feeder fibres 150, including a first 150-1 and a second 150-2 feeder fibre; a pair of retroreflectors 160, including a first 160-1 and a second 160-2 retroreflector; optical detector 170; controller 180; and a pair of Optical Network Terminals 190 (ONTs), including a first 190-1 and a second ONT 190-2.

The optical source 110 is provided at a head-end of the network 100, is connected to the spine fibre 120, and is configured to generate and emit an optical signal. The optical source forms part of an Optical Line Terminal and/or an Optical Test Head, for example as provided at a local exchange or a central office.

For reasons detailed below, the optical source 110 is configured to generate the optical signal with a narrow linewidth (*e.g.* less than 1 0MHz) and a high coherence length (*e.g.* up to a hundred or so meters, and more typically of the order of tens of meters). Accordingly, in this example, the optical source is in the form of a laser suitable for a large-area fibre optic telecommunications network, and more specifically a single-mode, stabilised, diode, and/or Distributed Feedback (DFB) laser/s.

In this example, to prevent potential disruption or degradation of telecommunications services between the headend and the ONTs 190, the optical signal is a diagnostic signal that is used for testing the network 100, rather than a telecommunications service signal that is instead used for providing the telecommunications services (*e.g*. data communication). As such, the optical signal has, at least, a wavelength that is different to wavelengths for telecommunications service signals. For example, the optical signal has a wavelength within the U-band, C-band or L-band (as defined by the ITU Telecommunication Standardization Sector).

The spine fibre 120 forms a part of an Optical Distribution Network (ODN) of the network 100, and is connected to the optical source 110 so as to carry, at least, the optical signal to the optical coupler 140. For example, the spine fibre is in the form of a Single-Mode Fibre (SMF), and is available to span several kilometres (typically, though not necessarily, between 1km and 20km).

The circulator 130 is arranged to interface with the spine fibre 120 and is connected to the optical detector 170 so as to direct reflections of the optical signal (i.e. returning - upstream - towards the optical source 110) to the optical detector 170.

In this example, the optical detector 170 comprises a light sensor, such as a photodiode, phototransistor or photomultiplier, for detecting the reflections of the optical signal as received from the circulator. The optical detector is configured to measure, during a monitoring period, incident light intensity and to report measurements thereof to the controller 180 for processing.

The spine fibre 120 is further connected to the optical coupler 140, at a terminus of the spine fibre distal to the optical source 110. The optical coupler is in turn connected to the feeder fibres 150, thereby effectively branching the spine fibre into said feeder fibres. As such, the optical signal is distributed by the optical coupler 140 to the first 150-1 and second 150-2 feeder fibres; in a reverse direction, reflections of the optical signal, are combined at the optical coupler. In this example, the optical coupler is in the form of a passive 1x2 optical splitter (*e.g*. a WDM splitter) that effectively serves to split the (single) spine fibre into the (two) first and second feeder fibres, and thereby forms a PON having a 1:2 split ratio.

The feeder fibres 150 also form a part of the ODN, and each feeder fibre (or "drop cable") is connected to the optical coupler 140 and to a respective one of the ONTs 190, such that the first feeder fibre 150-1 is connected to the first ONT 190-1, and the second feeder fibre 150-2 is connected to the second ONT 190-2. Accordingly, using the principles of a PON, telecommunications services are available to be provided to the ONTs 190 via the ODN. The feeder fibres 150 are typically (but need not be) of the order of tens of meters or up to a hundred or so meters in length.

Each of the feeder fibres 150 comprises a retroreflector 160 for reflecting a portion of the optical signal from the optical source 110 back towards said source, thereby generating the reflection of the optical signal. For example, the retroreflector is in the form of a Fibre Bragg Grating (FBG) tuned maximally to reflect at the wavelengths of the optical signal.

The first retroreflector 160-1 is provided at a first distance away from the optical coupler 140, whereas the second retroreflector 160-2 is provided at a second, and typically (but not necessarily) different, distance away from the optical coupler. The absolute difference between the first and second distances is herein referred to as the path distance, and is typically (but need not be) of the order of unit digits of meters to tens of meters. In order to survey as much of the network 100 as possible, the retroreflectors 160 are arranged as close to their respective ONT 190 as possible.

In this example, to prevent potential disruption or degradation of telecommunications services the retroreflectors 160 and circulator 130 are tuned to operate most effectively (*e.g.* having a greatest reflectivity) in respect of the optical signal, and to operate least effectively for telecommunications service signals (*e.g.* having a least reflectivity).

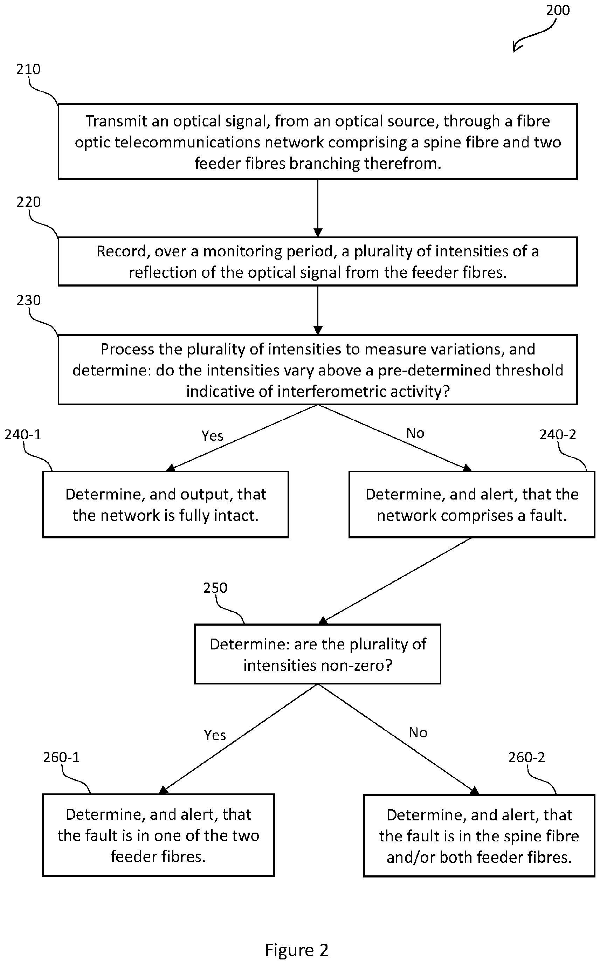

Figure 2 shows a process 200 for operating the network 100 so as to perform remote detection of physical continuity and discontinuity of the network 100.

In a first step 210, the optical source 110 is operated to transmit the optical signal to the retroreflectors 160. As described above, the optical source 110 is configured to generate the optical signal to have a high coherence length, and in particular this coherence length is greater than (or equal to the greatest of) the path difference and each of the first and second distances.

Accordingly, the characteristics and configuration of the network 100 described above effectively form a Michelson interferometer. More specifically, the linewidth and coherence length of the optical source 110, relative to the path difference, permits interference to occur at the optical coupler 140 as a result of a combination of the reflections of the optical signal from each retroreflector 160, thereby generating an interference pattern that is received by the optical detector 170.

At small (*e.g.* UV, optical and infrared) wavelengths, Michelson interferometry is highly sensitive to macroscopic changes in path difference (owing to interference operating as a function of wavelength). In the network 100, the feeder cables 160 are exposed to environmental temperature changes. In turn, such temperature changes cause thermal contraction and expansion of the feeder cables. Whilst the coefficient of thermal expansion of silica glass is relatively low, even a relatively minor temperature change of 1ºK in the first feeder cable 160-1, over an exemplary original first distance of 20m, results in a change in the first distance - and thus an extra on-way traversal distance for the optical signal - of around 125 multiples of wavelength (at 1500nm).

Aided by differences between the feeder cables 160 (*e.g.* exposure to different environments, by virtue of having different end-points, and thus paths, and compounded by differences in the first and second distances), the path difference can be expected to vary with time. Again, whilst this variation can be expected to be small (typically of the order of single, tens or hundreds of micrometres), the variation is non-negligible relative to the wavelength of the optical signal. Thus, such variation is capable of producing interferometrically significant changes in phase difference, which results in significant - and detectable - changes in an ensuing interference pattern, including in overall intensity and the number, sharpness, width and spacing of fringes.

Accordingly, at a next step 220, to detect, or infer, the presence of interferometric activity resulting in an interference pattern, the optical detector 170 is operated to sense an intensity of the reflected optical signal returning from the retroreflectors 160, via the optical coupler 130 and circulator 130, over a monitoring period (*e.g*. equal to a pulse width of the optical signal).

The optical detector 170 is operated to record a plurality of intensities of the reflected optical signal with time over the monitoring period. The recorded intensities are communicated from the optical detector to the controller 180.

The controller 180 is configured, and at a next step 230 is operated, to process the plurality of recorded intensities so as to measure an extent of temporal variation in intensity, and to identify whether said measured extent exceeds a pre-defined threshold, above which there is interferometric activity, and below which there is no interferometric activity. This variation is based on range (full, interquartile, *etc*.), variance, mean absolute deviation, and/or standard deviation.

It will be appreciated that the pre-defined threshold will depend on the specific set-up of the network 100, and in particular, at least, the wavelength of the optical signal, the first and second distances, the duration of the monitoring period, and temperature stability in the environ of the feeder cables 160.

However, if the network 100 is configured as a Michelson interferometer, then the temporal variation in intensity in the reflected optical signal can be expected - other pertinent variables being equal - to be far greater (potentially two, five or an order of magnitude) than if the network were not configured as a Michelson interferometer, owing to the aforementioned effect on path difference. Accordingly, in practice, the variation in intensities distinguishing between interferometric and non- interferometric activity is likely to be starkly discernible, especially with longer monitoring periods and/or periods of high temperature swings (*e.g*. sunrise and sunset).

Accordingly, if, at step 230, the controller 180 identifies the intensities of the reflected optical signal to have varied over the monitoring period in excess of the pre-defined threshold, then the controller determines, and outputs, at step 240-1 that the network is fully intact and absent of discontinuities. This is because, the threshold-exceeding variation in intensity is indicative of the network 100 operating as a Michelson interferometer in respect of the optical signal, which is achieved when the network, from the optical source 110 to both the retroreflectors 160, is unbroken. Accordingly, at step 240-1, a notification of a good working physical state of the network 100 is output.

Returning to step 230, if the controller 180 identifies the measured intensities of the reflected optical signal to vary, over the monitoring period, to an extent below the pre-defined threshold, then the controller determines, and outputs, at step 240-2 that the network 100 comprises a fault in the form of a discontinuity. This is because, the variation in intensity is indicative of the network 100 not operating as a Michelson interferometer in respect of the optical signal, which may be the result of a break in a path such that there is no interference. After step 240-2, process 200 proceeds to step 250 to further diagnose the fault.

At step 250, the controller 180 determines whether the measured intensities (*e.g*. based on a mean or median) are substantially zero or are significantly greater than zero.

If the controller 180 determines the measured intensities are substantially zero, then the controller determines, and outputs, at step 260-1 that there is a fault in the spine fibre 120 and/or in both feeder fibres 160, since no reflected optical signal is returning to the optical detector 170.

If, instead, the controller 180 identifies the measured intensities are substantially non-zero, then the controller determines, and outputs, at step 260-2 that there is a fault in one of the two feeder fibres 160 (*i.e.* the first 160-1 or the second 160-2), since a non-interferometric reflected signal is returned to the optical detector 170.

In either of steps 260, an operator of the network 100 may take remedial action, with eventuality 260-2 constraining the fault to one of the feeder fibres 160, and eventuality 260-1 indicative of a more major fault.

It will be appreciated that the network 100 shown in Figure 1 is purely exemplary, and is available to differ in various aspects, in particular as to a split ratio of the optical coupler 140 and thus the ensuing number of feeder fibres 160, as will be appreciated within the field of fibre optic telecommunications.

### Alternatives and Modifications

Since variation in intensity of an interference pattern follows a cosine function based on the path difference, intensity will vary far less around the minima and maxima of said function. Over a short enough monitoring period and with little change in path difference, this may result in the variation in intensity being below the pre-defined threshold, and therefore result in an erroneous determination that there is no interference, and thus that the network comprises a fault of the kind described with reference to step 260-2. To help mitigate this, in an alternative, the optical source 110 is configured to use at least two wavelengths for the optical signal so as to vary a point on the cosine function curve about which intensities varies, and therefore to increase the likelihood of moving away from said maxima or minima and instead to a steeper portion thereof. In this way, the network 100 may be made more sensitive, less error-prone, and permit more accurate detection over a shorter monitoring period. The optical source is available continuously or stepwise to vary wavelength, and in a pre-defined or random manner. Changing wavelength is performed by directly changing operation of the optical source (especially where said source is a tuneable laser), using an opto-electric frequency shifter, and/or by introducing filters into the path of the optical source.

In an alternative, the duration of the monitoring period is dynamically selected in dependence upon time (e.g. sunrise and sunset) and/or temperature data (*e.g.* from a weather forecast or readings from a weather station) in a local environment (*e.g.* at, proximate to, or most proximate to) the pair of feeder fibres 150, such that the monitoring period is decreased with increasing rates of temperature change, and vice versa.

In an alternative example, the retroreflectors 160 are switchable between a reflective state and a non-reflective state, for example by actuating the retroreflectors in- and out-of-path of the optical signal or by opto-electric manipulation.

In an alternative, each of the spine and feeder fibres comprise a multi-mode fibre optic cable (as opposed to a single-mode fibre optic cable), and the optical detector is an imaging sensor (*e.g.* a CCD) that is capable of imaging the reflected optical signal. In this way, where the reflected optical signal comprises an interference pattern, this is directly imaged and detected by the CCD without having to measure variation in intensity. In this way, process 200 is available to arrive at step 240-1 by directly observing an interference pattern, at step 260-1 by imaging a non-zero intensity reflected optical signal without an interference pattern, and at step 260-2 by imaging a zero-intensity signal.

Whilst the network 100 is shown as comprising a 1 x2 optical splitter, and therefore only two feeder fibres 150 and retroreflectors 160, the network is available to comprise a greater number of feeder fibres and retroflectors and still to be operated to detect physical intactness of the network 100 within the principles described above.

In one example, the network 100 comprises a plurality of the pairs of feeder fibres 150 (including the retroreflectors 160). Where the retroreflectors are switchable between the reflective and the non-reflective states, as described above, the network 100 can be operated to select specific pairs of the plurality of feeder fibres to test by rendering only the retroreflectors of said selected pairs reflective, and the remaining retroreflectors non-reflective. In this way, multiple pairs of feeder fibres can be sequentially tested by performing process 200 pairwise for each selected pair. This enables the exact location of a fault, down to a specific single feeder fibre, to be detected by performing process 200 for various combinations of selected pairs, until the faulty feeder fibre/s is/are identified.

Alternatively or additionally, the network 100 is also available to be operated as a multi-path Michelson interferometer, such that - when the network is fully intact - the interference pattern is generated from the interaction of at least three reflected optical signals from a corresponding number of feeder fibres 150.

By analysing, at the controller 180, the interference pattern, the number of intact and faulty feeder fibres can be identified or constrained. Such analysis may comprise image analysis on an imaged interference pattern to identify, from complexities in fringes, harmonics and temporal and spatial variation of an interference pattern, the number of paths contributing the interference pattern, or by measuring a rate of change of intensity where the reflected optical signal is not imaged (in which case a faster rate of, and/or more erratic or volatile, change may be indicative of a greater number of paths contributing the interferometric activity).

For example, for a 32-path Michelson interferometer (*i.e*. formed of 32 of the feeder fibres 160 and a 1-32 optical splitter), the rate of variation in intensity can be expected to be far higher when all 32 paths are intact (thereby forming a 32-path interference pattern) compared to when only two paths are intact (and therefore forming only a two-path interference pattern). Accordingly, by setting appropriate thresholds or bands for rates, and/or volatility, of intensity variation, the network can identify, or at least constrain, how many feeder fibres are intact even when there are three or more feeder fibres. Due to an increasingly sensitive, complex and chaotic nature of interaction with increasing numbers of feeder fibres potentially combining to form the interference patten, the thresholds or bands can be empirically derived, and/or a Machine Leaning signal processing algorithm, trained to determine a number of paths contributing to a sensed interference pattern, is employed to identify how many feeder fibres are intact.

In the examples described above, the optical signal is a diagnostic signal. However, in an alternative, the optical signal is a telecommunications service signal, in which case the retroreflectors 160 are beamsplitters that are tuned partially to reflect the telecommunications service signals.

In one embodiment, the system and/or its components or subsystems can include computing devices, processprs, microprocessors, modules and other computer or computing devices, which can be any programmable device that accepts digital data as input, is configured to process the input according to instructions or algorithms, and provides results as outputs. In one embodiment, computing and other such devices discussed herein can be, comprise, contain or be coupled to a Central Processing Unit (CPU) configured to carry out the instructions of a computer program. Computing and other such devices discussed herein are therefore configured to perform basic arithmetical, logical, and input/output operations.

Computing and other devices discussed herein can include memory. Memory can comprise volatile or non-volatile memory as required by the coupled computing device or processor to not only provide space to execute the instructions or algorithms, but to provide the space to store the instructions themselves. In one embodiment, volatile memory can include random access memory (RAM), dynamic random access memory (DRAM), or static random access memory (SRAM), for example. In one embodiment, non-volatile memory can include read-only memory, flash memory, ferroelectric RAM, hard disk, floppy disk, magnetic tape, or optical disc storage, for example. The foregoing lists in no way limit the type of memory that can be used, as these embodiments are given only by way of example and are not intended to limit the scope of the disclosure.

In one embodiment, the system or components thereof can comprise or include various modules or engines, each of which is constructed, programmed, configured, or otherwise adapted to autonomously carry out a function or set of functions. The term "engine" as used herein is defined as a real-world device, component, or arrangement of components implemented using hardware, such as by an application specific integrated circuit (ASIC) or field programmable gate array (FPGA), for example, or as a combination of hardware and software, such as by a microprocessor system and a set of program instructions that adapt the engine to implement the particular functionality, which (while being executed) transform the microprocessor system into a special-purpose device. An engine can also be implemented as a combination of the two, with certain functions facilitated by hardware alone, and other functions facilitated by a combination of hardware and software. In certain implementations, at least a portion, and in some cases, all, of an engine can be executed on the processor(s) of one or more computing platforms that are made up of hardware (*e.g*., one or more processors, data storage devices such as memory or drive storage, input/output facilities such as network interface devices, video devices, keyboard, mouse or touchscreen devices, etc.) that execute an operating system, system programs, and application programs, while also implementing the engine using multitasking, multithreading, distributed (e.g., cluster, peer-peer, cloud, etc.) processing where appropriate, or other such techniques. Accordingly, each engine can be realized in a variety of physically realizable configurations, and should generally not be limited to any particular implementation exemplified herein, unless such limitations are expressly called out. In addition, an engine can itself be composed of more than one sub-engines, each of which can be regarded as an engine in its own right. Moreover, in the embodiments described herein, each of the various engines corresponds to a defined autonomous functionality; however, it should be understood that in other contemplated embodiments, each functionality can be distributed to more than one engine. Likewise, in other contemplated embodiments, multiple defined functionalities may be implemented by a single engine that performs those multiple functions, possibly alongside other functions, or distributed differently among a set of engines than specifically illustrated in the examples herein.

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the claimed inventions.

Persons of ordinary skill in the relevant arts will recognise that embodiments may comprise fewer features than illustrated in any individual embodiment described above. The embodiments described herein are not meant to be an exhaustive presentation of the ways in which the various features may be combined. Accordingly, the embodiments are not mutually exclusive combinations of features; rather, embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted. Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended. Furthermore, it is intended also to include features of a claim in any other independent claim even if this claim is not directly made dependent to the independent claim.

Moreover, reference in the specification to "one embodiment," "an embodiment," or "some embodiments" means that a particular feature, structure, or characteristic, described in connection with the embodiment, is included in at least one embodiment of the teaching. The appearances of the phrase "in one embodiment" in various places in the specification are not necessarily all referring to the same embodiment.

Any incorporation by reference of documents above is limited such that no subject matter is incorporated that is contrary to the explicit disclosure herein. Any incorporation by reference of documents above is further limited such that no claims included in the documents are incorporated by reference herein. Any incorporation by reference of documents above is yet further limited such that any definitions provided in the documents are not incorporated by reference herein unless expressly included herein.

Each feature disclosed herein, and (where appropriate) as part of the claims and drawings may be provided independently or in any appropriate combination.

Any reference numerals appearing in the claims are for illustration only and shall not limit the scope of the claims.

## Claims

1. A method of operating a fibre optic telecommunications network, said network comprising a/an:
spine fibre;
pair of feeder fibres;
retroreflector arranged on each of the feeder fibres;
optical coupler configured to split the spine fibre into the pair of feeder fibres;
optical source connected to the spine fibre and configured to transmit a coherent optical signal through the spine fibre to each of the retroreflectors, via the optical coupler and the pair of feeder fibres, said optical signal having a coherence length equal to or greater than distances between:
the optical coupler and each of the retroreflectors, along the respective feeder fibre; and
each of the retroreflectors, along the pair of feeder fibres and via the optical coupler; and
optical detector connected to the spine fibre;
the method comprising the steps of:
transmitting, by the optical source, the optical signal to the retroreflectors;
monitoring, at the optical detector, for a reflection of the transmitted optical signal from at least one of the retroreflectors; and
in response to detecting that the reflection is:
absent, determining that the spine fibre and/or both of the feeder fibres comprise a fault;
present and absent an interference pattern, determining that one, but not the other, of the feeder fibres comprises a fault; and
present and comprises an interference pattern, determining that the spine fibre and both the feeder fibres are intact.

2. A method according to Claim 1, wherein the step of determining that the reflection comprises the interference pattern comprises the further steps of:
measuring, at the optical detector, temporal variation of intensity of the reflection; and
identifying the interference pattern to be present in response to the variation exceeding a pre-determined threshold.

3. A method according to Claim 1 or 2, wherein the spine fibre and the pair of feeder fibres each comprise multi-mode fibre optic cables, wherein the detector comprises an imaging sensor, and wherein the step of determining the presence of the interference pattern comprises identifying an image of an interference pattern as sensed by the image sensor.

4. A method according to any preceding claim, wherein each retroreflector is switchable between a reflective state, in which to reflect the optical signal thereby to produce the reflection, and a non-reflective state, in which to permit the optical signal to pass beyond the retroreflector.

5. A method according to any preceding claim, wherein each retroreflector is reflective at a first frequency band and is transparent at a second, different, frequency band, and wherein the:
optical signal is within the first frequency band and not within the second frequency band; and
first frequency band is for diagnostic services and not for providing telecommunications services to a user.

6. A method according to any preceding claim, wherein the network further comprises:
at least one further feeder fibre, branching from the optical coupler and comprising a further retroreflector; and
wherein the method further comprises the steps of:
analysing the reflection so as to determine the number of the at least three feeder fibres that form the interference pattern; and
determining said number of the three feeder fibres to be intact, and the remaining feeder fibres to comprise a fault.

7. A method according to any preceding claim, further comprising a step of varying a wavelength of the optical signal whilst performing the monitoring for the reflection.

8. A computer-readable carrier medium comprising a computer program, which, when the computer program is executed by a computer, causes the computer to carry out the steps of any one of the preceding claims.

9. A fibre optic telecommunications network comprising a/an:
spine fibre;
pair of feeder fibres;
retroreflector arranged on each of the feeder fibres;
optical coupler configured to split the spine fibre into the pair of feeder fibres;
optical source connected to the spine fibre and configured to transmit a coherent optical signal through the spine fibre to each of the retroreflectors, via the optical coupler and the pair of feeder fibres, said optical signal having a coherence length equal to or greater than distances between:
the optical coupler and each of the retroreflectors, along the respective feeder fibre; and
each of the retroreflectors, along the pair of feeder fibres and via the optical coupler;
optical detector connected to the spine fibre; and
processor configured to process readings from the optical detector;
wherein the:
optical source is configured to transmit the optical signal to the retroreflectors;
optical detector is configured to monitor for a reflection of the transmitted optical signal from at least one of the retroreflectors; and
processor is configured to, in response to detecting, from the readings, that the reflection is:
absent, determine that the spine fibre and/or both of the feeder fibres comprise a fault;
present and absent an interference pattern, determine that one, but not the other, of the feeder fibres comprises a fault; and
present and comprises an interference pattern, determine that the spine fibre and both the feeder fibres are intact.
